# EUROPEAN PATENT SPECIFICATION

(11) **EP 1 400 969 B1**
(45) Date of publication and mention of the grant of the patent: **14.11.2007**
(21) Application number: 02090324.1
(22) Date of filing: 10.09.2002
(51) Int. Cl.: G11B 19/12

(54) **Method and apparatus for reproducing audio and/or video data from a removable storage medium**
Verfahren und Gerät zur Wiedergabe von Ton und/oder Videodatei aus einem herausnehmbaren Aufzeichnungsträger
Méthode et appareil pour la reproduction des données audio et/ou vidéo d'un support d'enregistrement amovible

(43) Date of publication of application: 24.03.2004
(73) Proprietor: Thomson Licensing, 92100 Boulogne-Billancourt (FR)
(72) Inventor: Schiller, Harald, 30539 Hannover (DE); Hörentrup, Jobst, 30161 Hannover (DE); Janssen, Uwe, 30926 Seelze (DE); Peters, Hartmut, 30890 Barsinghausen (DE); Winter, Marco, 30173 Hannover (DE)
(74) Representative: Hartnack, Wolfgang

(56) References cited:
- EP-A- 0 834 876
- EP-A- 1 207 527
- US-A1- 2001 014 067

## Description

The invention relates to a method and to an apparatus for reproducing audio and/or video data from a removable storage medium using a reproduction device that is adapted for reproducing a storage medium conforming to a first recording format, the storage medium conforming to the first recording format or to a second recording format different from the first recording format.

### Background

Optical storage media facilitate recording or replaying of audiovisual (AV) signals that include one or more video and audio data streams and/or other data like subpictures and service information. Based on the Digital Versatile Disc (DVD) standard published by www.dvdforum.org, a strong Consumer Electronics (CE) industry has arisen, where pre-recorded movie titles are replicated for a mass market using read-only optical discs. The DVD-Video format, which corresponds to one part of the above DVD standard and which is used for this purpose, provides several special functionalities that were tailored to the requirements of professional movie industry application:
- There is a special data structure to designate a piece of movie material to be reproduced upon entry of the disc into any player.
- The DVD-Video format provides for a navigation command, by which user operations can be temporarily forbidden, i.e. the player control can be temporarily restricted under disc content control.
- The DVD-Video format provides data structures on disc that are powerful tools for the design and effectiveness of content owner controlled menus.
- In addition to the audio and video components or channels of a movie, the DVD-Video format provides a set of separate data channels dedicated for subtitling or graphics. These channels can contain arbitrarily-sized colour lookup table pixel graphics coded by runlength compression; a maximum of 32 such channels is allowed in parallel. The user can select, which if any of these subtitling channels shall be decoded alongside the AV and be superimposed onto the video component.
- For the audio component of movies, the DVD-Video format allows for a maximum of eight independent channels, from which the user can select one for decoding and presentation. In this way, the format enables for multi-language discs economically serving several markets at the same time.

Following introduction and proliferation of the red laser based DVD standard, a blue laser based media system of even higher capacity has recently been published under the brand name 'Blu-ray Disc' denoted BD, cf. EP-A-1 103 974.
The BD system is not compatible with the above DVD standard.

US 2001/014067 A1 discloses an apparatus and system for reproducing different types of DVD, switching between physically different disc formats having different recording densities.

### Invention

It is desirable that one application of BD covers the replication of pre-recorded movies on read-only BD discs. Because of the increased capacity of BD discs, this will allow full-length feature films in HDTV resolution. Because of the artistic requirements from professional content owners a future format 'BD-Prerecorded', denoted BD-P in this application, should have special functionalities at least as powerful as those known from the DVD system, although such BD-P system will not be compatible with the DVD standard because the BD system is not compatible with the DVD standard.

Up to now, only a self-recording application of BD has been proposed publicly under the acronym 'BDAV', which allows camcorder and broadcast user-recording of audio/video signals, cf. EP-A-1 103 974. Aiming to be as lightweight as possible, and because of its intended application, the BDAV format does not incorporate any of the above mentioned special functionalities known from DVD. There is no special data structure to designate a piece of movie material to be reproduced upon entry of the disc into any player. There is no command by which user operations can be temporarily forbidden. There are no data structures on the BDAV discs that are tools for designing content owner controlled menus. There are no data structures on the BDAV discs for implementing subtitling or graphics. The discs merely contain user interface data like text strings, name, title and thumbnails (i.e. small icons). It is a design matter of the player, not the disc, how those data are represented to a user.

On one side, it is desirable that the user experience with replaying a future BD-P disc on a BDAV player or device should be made (in some respects) similar to the user's experience with replaying a DVD-Video disc on a DVD player.
On the other side, replaying a BD-P disc on a BDAV player or device and thereby providing these features should be made as compatible as possible with the given functionality of the BDAV system.

A problem to be solved by the invention is to make a BDAV reproduction, also when using a self-recording device, behaving differently when replaying optical disc media that are compliant to a format different from the BDAV format, for example a pre-recorded or a different self-recorded disc format.
A further problem to be solved by the invention is to enable such desirable reproduction behaviour even in case the specific features of one of the (pre-recorded) media formats is unknown.

This problem is solved by the method disclosed in claim 1. An apparatus that utilises this method is disclosed in claim 5.

Advantageously, the invention facilitates a nearly compatible playback of BD-Prerecorded discs on devices according to the current version of the BDAV standard as far as it is known. Many of the special features of reproduction control, to which content owners have become used in the deployment of DVD-Video, can thus be approximated in BDAV devices.

The invention proposes special data structures on optical media, as well as a set of agreed reproduction apparatus properties allowing said reproduction apparatus to behave in one of at least two different ways.
Such data structures allow to distinguish which type of optical media, for instance a pre-recorded disc or a self-recorded disc storing bitstreams from e.g. a broadcast program or from a camera, is present in said apparatus.
Said properties are intended to be specifically incorporated into reproduction apparatuses intended for self-recording applications.
In combination, said data structures and said agreed properties enable a reproduction apparatus to behave differently when confronted with a pre-recorded disc, and thus to implement a certain desirable reproduction behaviour.

In principle, the inventive method is suited for reproducing audio and/or video data from a removable storage medium using a reproduction device that is adapted for reproducing data from a storage medium conforming to a first recording format, wherein said storage medium conforms to said first recording format or conforms to a second recording format different from said first recording format, said method including the steps:
- upon inserting said storage medium into said reproduction device, reading a characterising information from said storage medium;
- determining from said characterising information whether said storage medium inserted into said reproduction device conforms to said first or to said second recording format;
- if said inserted storage medium conforms to said second recording format, compulsorily reproducing preamble data stored on said second recording format storage medium, whereby the storage media conforming to said first recording format do not contain such preamble data to be reproduced compulsorily.

In principle the inventive apparatus is suited for reproducing audio and/or video data from a removable storage medium and is adapted for reproducing data from a storage medium conforming to a first recording format, wherein said storage medium conforms to said first recording format or conforms to a second recording format different from said first recording format, said reproduction apparatus including:
- means for reading a characterising information from said storage medium upon inserting said storage medium into said reproduction apparatus;
- means for determining from said characterising information whether said storage medium inserted into said reproduction apparatus conforms to said first or to said second recording format;
- first reproducing means for reproducing audio and/or video data from said inserted storage medium if that storage medium conforms to said first recording format;
- second reproducing means for reproducing audio and/or video data from said inserted storage medium if that storage medium conforms to said second recording format.

Advantageous additional embodiments of the invention are disclosed in the respective dependent claims.

### Drawings

Exemplary embodiments of the invention are described with reference to the accompanying drawings, which show in:
- Fig. 1: Simplified file structure on a BD-P disc;
- Fig. 2: Simplified file structure with common structures on both, BD-P and BDAV discs;
- Fig. 3a: Simplified BD-P disc file structure concerning preamble data;
- Fig. 3b: Flowchart of the inventive processing;
- Fig. 4: Simplified BD-P disc file structure concerning preamble data for multiple preambles;
- Fig. 5: Simplified BD-P disc file structure wherein the number of preamble stream files is smaller than the number of preamble playlist files;
- Fig. 6: Simplified BDAV disc file structure with information item reserved for future use;
- Fig. 7: Simplified BD-P disc file structure with duplicated subtitling information;
- Fig. 8: Irremovably overlaid subtitling data on a BD-P disc;
- Fig. 9: Simplified BD-P disc file structure with text and/or thumbnail data;
- Fig. 10: Simplified BD-P disc file structure with multi-language AV content;
- Fig. 11: Simplified BD-P disc file structure with multi-language AV content and language codes;
- Fig. 12: Simplified BD-P disc file structure with multi-language menus;
- Fig. 13: Processing stages used in the inventive processing including disc type determination and two branches of reproduction processing;
- Fig. 14: Simplified block diagram of an inventive reproduction device.

### Exemplary embodiments

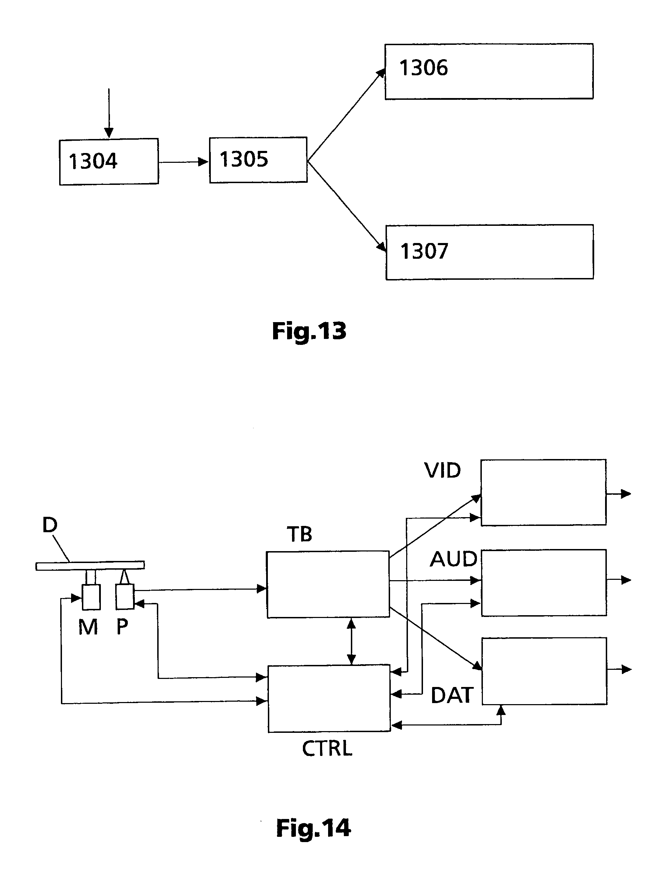

Fig. 14 shows an optical disk D, which is driven by a motor M and from which data are read by means of a pick-up P. The data coming from P are fed in conditioned form, for example after amplification and error correction, to a track buffer TB. Buffer TB compensates for instantaneous or short-term data rate variations. The corresponding partial data streams of the buffer-stored data stream are transferred from the track buffer TB in each case into an associated decoder: a video decoder VID for e.g. MPEG video data, an audio decoder AUD for e.g. MPEG or AC3 or DTS audio data, and a further data decoder for any other type of data.
Motor M, pick-up P, track buffer TB and the video, audio and other data decoders VID, AUD and DAT, and any other stages not depicted, are controlled by controlling means CTRL that can include several processors each controlling part of the above functional blocks.
The controlling means CTRL are used to carry out the invention: basically, determining whether disc D has said first or said second recording format, and forcing M, P, TB, VID and AUD to reproduce preamble data stored on disk D if that disc is of the second recording format type.

Fig. 13 depicts the inventive functions carried out using controlling means CTRL. Data readout means 1304 receive the corresponding data from disc D via pick-up P and track buffer TB. Means 1305 determine whether disk D complies with the first or the second recording format. The data from data readout means 1304 will be passed through to reproduction means 1306 if disc D complies to the first recording format. The data from data readout means 1304 will be passed through to reproduction means 1307 if disc D complies to the second recording format.

In a first embodiment, the read-only variant of an optical storage medium according to the invention will contain an indicator, by which the read-only variant can be distinguished from the writable variant of the optical storage medium. For example, such indicator can be embodied either (a) as a directory or a file that exists for the read-only variant and that is absent from the writable variant, or (b) can be embodied as a database file mandated for both media variants encompassing global information items and parameters about the disc as a whole, containing at least one information item (e.g. a flag) having a first value for the read-only variant and a second value for the writable variant.

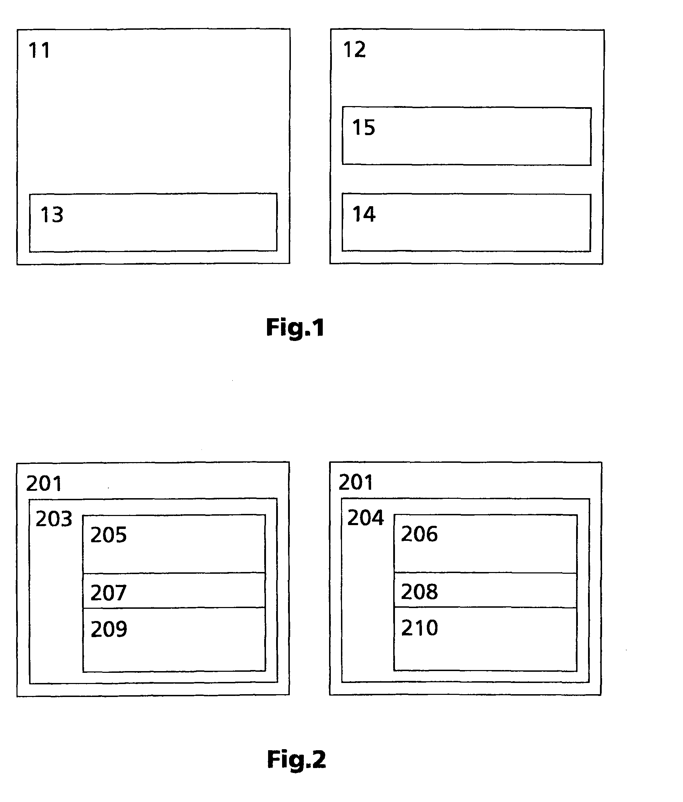

Figure 1 depicts feature (a), where 11 represents the contents of a writable storage medium (e.g. BDAV disc) and 12 that of a read-only medium (e.g. BD-P disc). 13 and 14 represent those data structures and/or files which are present on both kinds of medium, whereas 15 represents the distinguishing indicator in the form of a directory or file, which exists only for the read-only variant. Figure 2 depicts feature (b), where 201 represents the contents of a writable storage medium (e.g. BDAV disc) and 202 that of a read-only medium (e.g. BD-P disc). 203/204 is a database file which exists for both media variants, 205/206 depicts any leading information items with identical syntax and semantics which may exist in the database file 203/204. 205/206 represents the information item having a first value for the read-only variant and a second value for the writable variant, and 207/208 depicts any trailing information items with identical syntax and semantics which may exist in the database file 203/204.

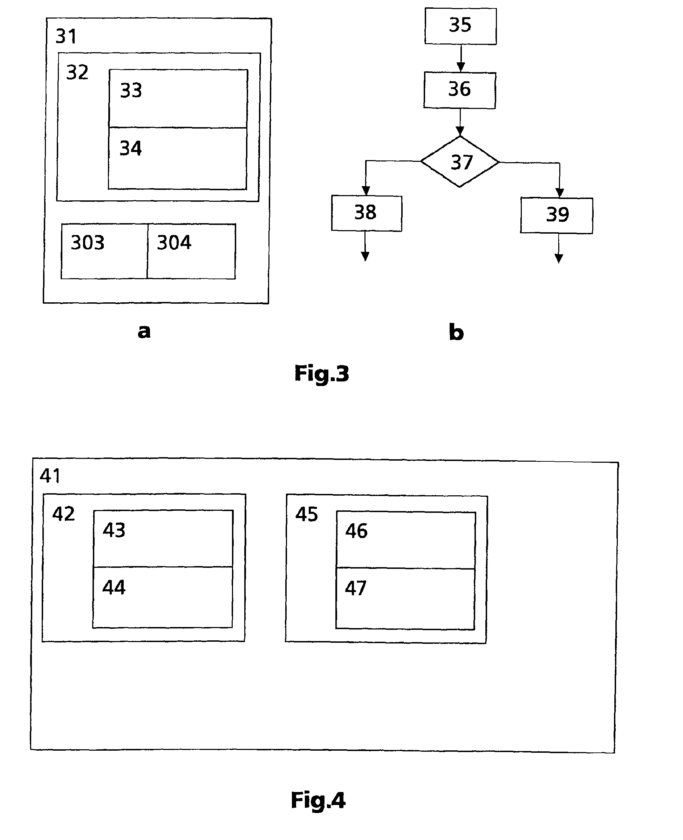

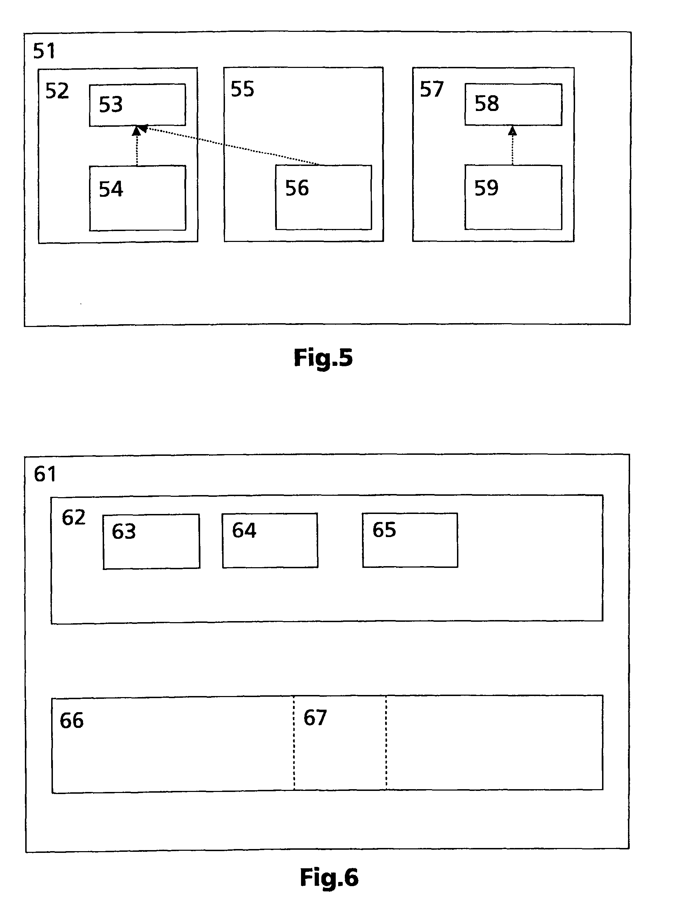

In a second embodiment illustrated in Fig. 3, that can be an extension of the first embodiment or not, pre-recorded disc media 31 must contain a dedicated preamble 32 including a preamble stream file 33 and an associated preamble playlist file 34. The reproduction apparatus must reproduce 36 the preamble immediately after media insertion 35 and prohibit any user operation on the apparatus except those which completely terminate the reproduction, e.g. 'stop' or 'power off'. After mandatorily reproducing 36 the preamble, the apparatus is mandated either (a) to transit to a playlist menu 38 if 37 it does equip such a menu, or (b) to transit to reproducing 39 the first playlist other than the preamble.
In a first variant of this embodiment, the preamble stream files 33 are always of standard definition resolution, even when other stream files 303, 304 on the medium have high definition resolution.
In a second variant, the apparatus does not list the preamble stream file 33 in a menu of stream files if such a menu is equipped in its user interface, nor does it list the preamble playlist file 34 in a menu of playlists, if existing. In a third variant illustrated in Fig. 4, there exist two or more preambles 42, 45 per disc 41, each preamble 42, 45 being a separate language version and including an individual preamble stream file 43, 46 as well as preamble playlist file 44, 47. Each preamble playlist language version 42, 45 contains language-specific title and summary information, and each preamble stream language version 43, 46 contains the AV sequence legally required or desired to be shown to consumers preferring a certain language, potentially with a dedicated language audio component, e.g. a legal sentence spoken.
In a fourth variant illustrated in Fig. 5, the number of preamble stream files 53, 58 on the disc 51 can be smaller than the number of preamble playlist files 54, 56 and 59, because several preamble playlist files 54, 56 can share a preamble stream file 53, if appropriate, when these preamble playlist files are associated with the same preamble stream file 53.

In a third embodiment illustrated in Fig. 6, within a database file 62 compliant to the BDAV standard containing several information items 63, 64 and 65, one information item 64 is considered which the BDAV standard reserves for future use and mandates to have a first predetermined value. If this information item 64, however, has a second predetermined value, it shall act as a flag, indicating that during the playback of some part 67 of an AV stream file 66 on the same storage medium 61 as the database file 62, that part 67 being further specified by the database file 62, all user operations except those that completely terminate the playback (e.g. 'stop' or 'power off') are disabled. More specifically, the database file 62 can be chosen as a 'playlist file' describing one specific presentation of the AV streams file 66 stored on the medium 61. Further, within the playlist file, the information item 64 can be chosen as one part of a 'play item' data structure describing one continuous piece of AV material to be reproduced.

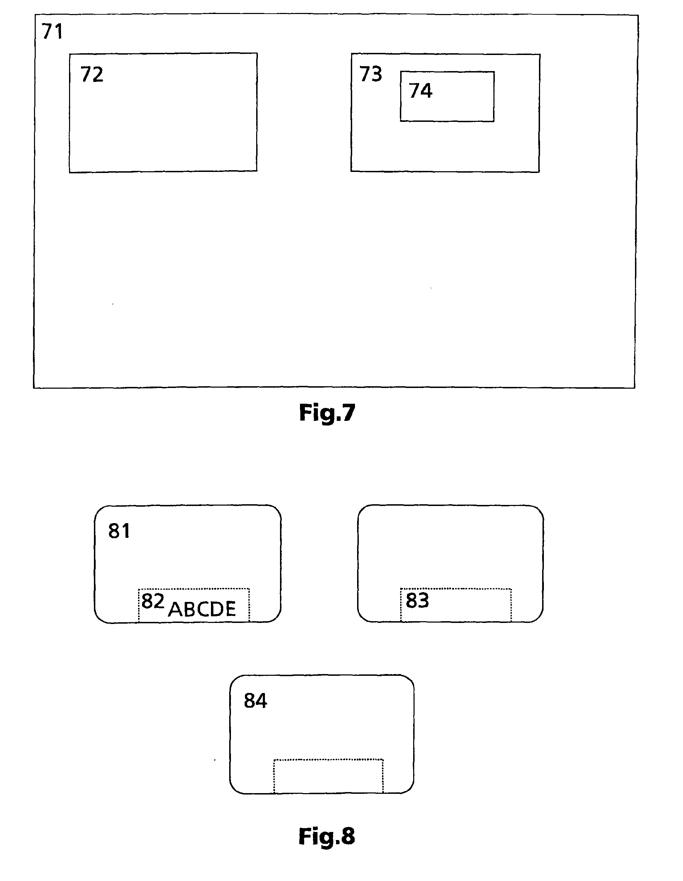

In a fourth embodiment illustrated in Fig. 7, on a pre-recorded disc 71 according to the invention, some or all of the subtitling information 72 which may exist on the disc coded in a pre-recorded data format is additionally included within the AV stream file 73 as duplicated subtitling information 74 in a format which allows the reproduction apparatus to pass the subtitling information on to the outside, when the AV stream data are digitally output to a decoding and display device. Examples of such formats are:
- the 'Line 21' data service according to A/53, "ATSC Digital Television Standard", September 1995, and EIA/CEA-608-B, "Line 21 Data Services", October 2000;
- the 'Teletext' system according to EN 300 472, "DVB: Specification for conveying ITU-R System B Teletext in DVB bit-streams", August 1997;
- the DVB 'Subtitling' data service according to ETS 300 743 V1, "DVB Subtitling Systems", September 1997.

As an alternative to the fourth embodiment, illustrated in Fig. 8, any subtitling data 82 (e.g. those which the content provider deems indispensable for the entire target audience of the pre-recorded media), can be irremovably overlaid onto the video component 81 prior to encoding during the content authoring process of the AV stream file for the pre-recorded media. If this is done, it is advantageous that the media contains an additional data structure, which nominally is coded according to the pre-recorded format for subtitle data, but the content of which is actually a spatio-temporal subset 83 of the original subtitle-less video, the purpose of this additional data structure being to serve as a cover-up patch, so that by decoding the AV stream file (containing subtitling in its video component) and decoding the additional data structure, and combining the two decoding outputs according to the rules of the pre-recorded format into a covered-up video component 84, a de facto subtitle-less video display can be achieved.

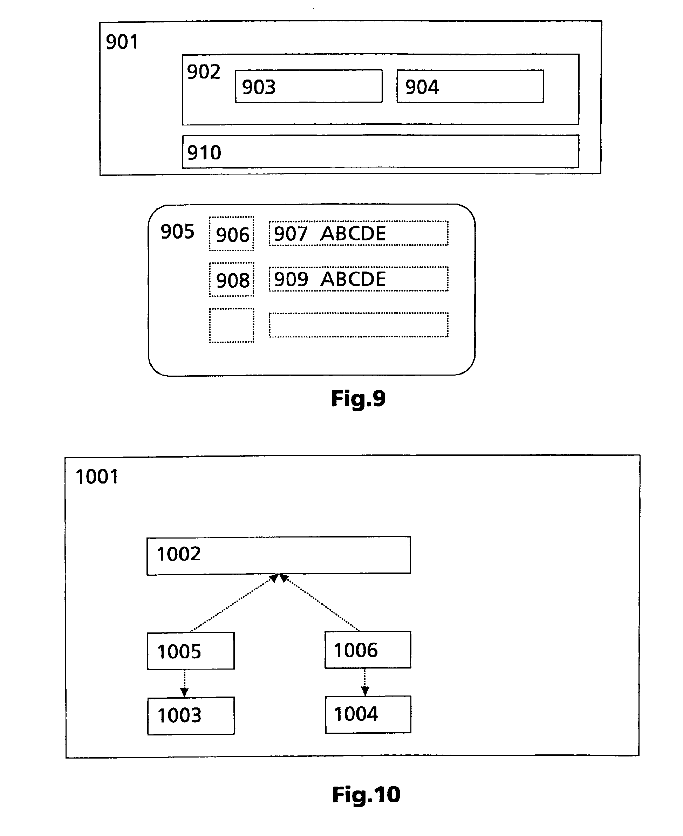

In a fifth embodiment of the invention illustrated in Fig. 9, a pre-recorded disc 901 contains text 903 and/or thumbnail 904 (or icon) data contained in a database file 902 in BDAV format, describing the AV titles on the medium 901. The BDAV standard is augmented with a recommended playlist menu layout, describing generally applicable rules how text 903 and/or thumbnail 904 data existing on a medium 901 shall be arranged into one or more menu screens 905, where thumbnails are represented as little icons 906, 908, and texts 907, 909 are displayed accompanying them. In this case it is advantageous, that the pre-recorded disc contains, in parallel to the text and/or thumbnail data in BDAV format, other data 910 coded in the pre-recorded format, which realise a fully content provider-controlled menu.

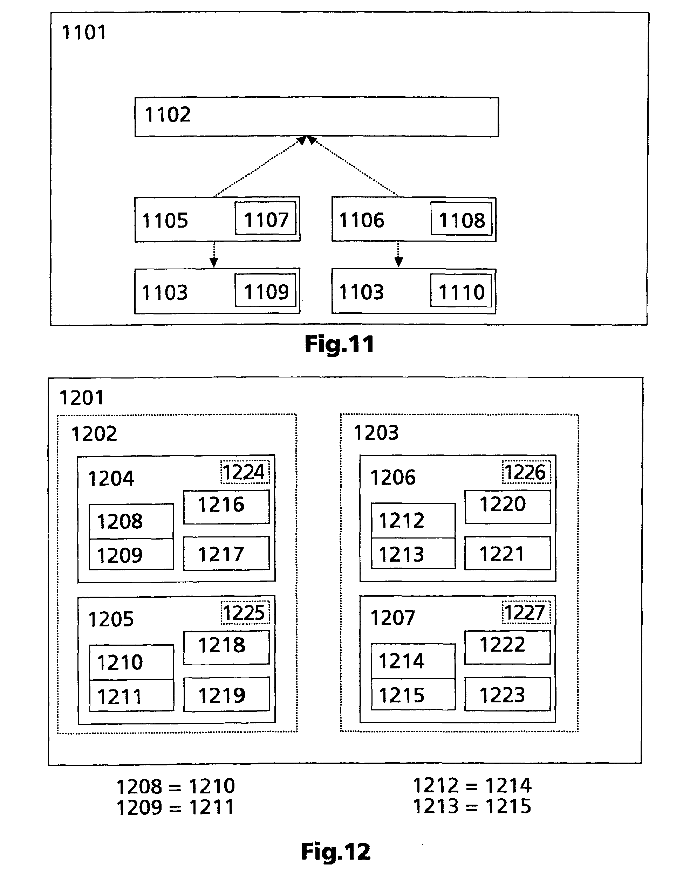

In a sixth embodiment illustrated in Fig. 10, a multi-language AV content is contained on a pre-recorded disc 1001 as one video stream file 1002 compliant to the BDAV format plus one or more audio stream files 1003, 1004 compliant to the dubbing audio format of the BDAV format. In this case it is advantageous that, for each dubbing audio stream file, an associated playlist file 1005, 1006 is stored on the disc, which causes a BDAV device to combine for representation the video stream file 1002 and the associated dubbing audio stream file 1003/1004.
In a variant of this embodiment illustrated in Fig. 11, the playlists 1105, 1106 and/or the dubbing audio stream files 1103, 1104 contain a language code 1107, 1108, 1109, 1110, and the BDAV device may equip a mode of operation, where only those playlists 1105/1106 are shown to the user in a playlist menu, the language code 1107/1108/1109/1110 of which coincides with a preferred language code set by the user and stored as a device setting parameter.

In a seventh embodiment illustrated in Fig. 12, multi-language menus are realised by providing each independent playlist 1202, 1203 in several versions, i.e. as several playlist files 1204, 1205, 1206, 1207 on the pre-recorded disc 1201, all those files being compliant with the BDAV standard, containing identical play items 1208/1210, 1209/1211, 1212/1214, 1213/1215, but containing different playlist texts 1216/1218/1220/1222 and/or different thumbnail (or icon) references 1217/1219/1221/1223. Advantageously, the BDAV standard is augmented by a mechanism (e.g. a language code) to indicate for each playlist file 1204/1205/1206/1207 which language it does contain, whereby this mechanism is to be made fully compliant with the existing BDAV standard (e.g. by using the first characters of a character string field for a language code 1224, 1225, 1226, 1227), and whereby BDAV devices, if playing a pre-recorded disc, equip a mode of operation, where only those playlists 1204, 1205, 1206, 1207 are shown to the user in a playlist menu, the language code 1224, 1225, 1226, 1227 of which coincides with a preferred language code set by the user and stored as an device setting parameter.

## Claims

1. Method for reproducing audio and/or video data from a removable storage medium (D, 31) using a reproduction device that is adapted for reproducing data from a storage medium conforming to a first recording format, wherein said storage medium conforms to said first recording format or conforms to a second recording format different from said first recording format, said method including the steps:
- upon inserting said storage medium (D, 31) into said reproduction device, reading (1304, P) a characterising information from said storage medium;
- determining (1305, CTRL) from said characterising information whether said storage medium inserted into said reproduction device conforms to said first or to said second recording format,
**characterised by**:
- if said inserted storage medium conforms to said second recording format, compulsorily reproducing (1307) preamble data (32) stored on said second recording format storage medium,
wherein storage media conforming to said first recording format do not contain such preamble data to be reproduced compulsorily, said first recording format being a user-recorded format and said second recording format being a pre-recorded format.

2. Method according to claim 1, wherein during reproduction of said preamble data (32) stored on said storage medium (31, D) conforming to said second recording format no user interaction command is executable on said reproduction device, except performing a stop command for stopping the reproduction of said preamble data or performing a power-off command for switching off said reproduction device.

3. Method according to claim 1 or 2, wherein said second recording format storage medium (41) carries two or more preamble data information items (42, 45) each of which belonging to another language version, and wherein that language version preamble data information item is selected for compulsory reproduction which corresponds to a pre-selected language.

4. Method according to one of claims 1 to 3, wherein said second recording format storage medium (71) carries subtitling information (72) and an AV stream file (73),
wherein within said AV stream file part or all of said subtitling information is stored as duplicated subtitling information (74), which duplicated subtitling information is output together with said audio and/or video data when reproducing said audio and/or video data.

5. Apparatus for reproducing audio and/or video data from a removable storage medium (D, 31) and being adapted for reproducing data from a storage medium conforming to a first recording format, wherein said storage medium conforms to said first recording format or conforms to a second recording format different from said first recording format, said reproduction apparatus including:
- means (1304, P) for reading a characterising information from said storage medium upon inserting said storage medium into said reproduction apparatus;
- means (1305, CTRL) for determining from said characterising information whether said storage medium inserted into said reproduction apparatus conforms to said first or to said second recording format;
- first reproducing means (1306) for reproducing audio and/or video data from said inserted storage medium if that storage medium conforms to said first recording format,
**characterised by**:
- second reproducing means (1307) for reproducing audio and/or video data from said inserted storage medium which second reproducing means, if that storage medium conforms to said second recording format, compulsorily reproduce (1307) preamble data (32) stored on said storage medium, wherein storage media conforming to said first recording format do not contain such preamble data to be reproduced compulsorily, said first recording format being a user-recorded format and said second recording format being a pre-recorded format.

## Patentansprüche

1. Verfahren zur Wiedergabe von Audio- und/oder Videodaten von einem herausnehmbaren Aufzeichnungsträger (D, 31) unter Verwendung eines Wiedergabegerätes, das zur Wiedergabe von Daten von einem Aufzeichnungsträger eingerichtet ist, der in Einklang mit einem ersten Aufzeichnungs-Format ist, wobei der Aufzeichnungsträger in Einklang mit dem ersten Aufzeichnungs-Format oder in Einklang mit einem zweiten, sich von dem ersten Aufzeichnungs-Format unterscheidenden Aufzeichnungs-Format ist, wobei das Verfahren die folgenden Schritte einschließt:
- Lesen (1304, P) einer charakterisierenden Information von dem Aufzeichnungsträger beim Einsetzen des Aufzeichnungsträgers (D, 31) in das Wiedergabegerät;
- Bestimmen (1305, CTRL) aus der charakterisierenden Information, ob der in das Wiedergabegerät eingesetzte Aufzeichnungsträger mit dem ersten oder dem zweiten Aufzeichnungs-Format in Einklang ist; **gekennzeichnet durch**:
- obligatorische Wiedergabe (1307) von Präambel-Daten (32), die auf dem Aufzeichnungsträger für das zweite Aufzeichnungs-Format gespeichert sind, wenn der eingesetzte Aufzeichnungsträger in Einklang mit dem zweiten Aufzeichnungs-Format ist,
- wobei Aufzeichnungsträger, die in Einklang mit dem ersten Aufzeichnungs-Format sind, keine solchen obligatorisch wiederzugebenden Präambel-Daten enthalten, wobei das erste Aufzeichnungs-Format auf ein vom Benutzer aufgezeichnetes Format und das zweite Aufzeichnungs-Format ein vor-aufgezeichnetes Format ist.

2. Verfahren nach Anspruch 1, bei dem während der Wiedergabe der auf dem Aufzeichnungsträger (31, D), der mit dem zweiten Aufzeichnungs-Format in Einklang ist, gespeicherten Präambel-Daten, in dem Wiedergabegerät kein Befehl durch Benutzer-Einwirkung ausführbar ist, ausgenommen die Ausführung eines Stopp-Befehls zum Anhalten der Wiedergabe der Präambel-Daten oder die Ausführung eines Stromabschalt-Befehls zum Abschalten des Wiedergabegerätes.

3. Verfahren nach Anspruch 1 oder 2, bei dem der Aufzeichnungsträger (41) für das zweite Aufzeichnungs-Format zwei oder mehr Präambel-Daten-Informations-Einzelheiten (42, 45) enthält, von denen jede zu einer anderen Sprachen-Version gehört, und bei dem die die Sprachen-Version betreffende Präambel-Daten-Informations-Einzelheit für obligatorischen Wiedergabe gewählt wird, die einer vorgewählten Sprache entspricht.

4. Verfahren nach einem der Ansprüche 1 bis 3, bei dem der Aufzeichnungsträger (71) für das zweite Aufzeichnungs-Format Untertitel-Informationen (72) und eine AV-Stromdatei (73) enthält, wobei in der AV-Stromdatei ein Teil oder alle Untertitel-Informationen als duplizierte Untertitel-Informationen (74) gespeichert werden, die zusammen mit den Audio- und/oder Videodaten ausgegeben werden, wenn die Audio- und/oder Videodaten wiedergegeben werden.

5. Gerät zur Wiedergabe von Audio- und/oder Videodaten von einem herausnehmbaren Aufzeichnungsträger (D, 31), das zur Wiedergabe von Daten von einem Aufzeichnungsträger eingerichtet ist, der in Einklang mit einem ersten Aufzeichnungs-Format ist, wobei der Aufzeichnungsträger in Einklang mit dem ersten Aufzeichnungs-Format oder in Einklang mit einem zweiten, sich von dem ersten Aufzeichnungs-Format unterscheidenden Aufzeichnungs-Format ist, wobei das Wiedergabegerät enthält:
- Mittel (1304, P) zum Lesen einer charakterisierenden Information beim Einsetzen des Aufzeichnungsträgers in das Wiedergabegerät;
- Mittel (1305, CTRL) zum Bestimmen aus der charakterisierenden Information, ob der in das Wiedergabegerät eingesetzte Aufzeichnungsträger mit dem ersten oder dem zweiten Aufzeichnungs-Format in Einklang ist;
- erste Wiedergabemittel (1306) zur Wiedergabe von Audio- und/oder Videodaten von dem eingesetzten Aufzeichnungsträger, wenn der Aufzeichnungsträger in Einklang mit dem ersten Aufzeichnungs-Format ist, **gekennzeichnet durch**:
- zweite Wiedergabemittel (1307) zur Wiedergabe von Audio- und/oder Videodaten von dem eingesetzten Aufzeichnungsträger, die für den Fall, dass der Aufzeichnungsträger in Einklang mit dem zweiten Aufzeichnungs-Format ist, obligatorische Präambel-Daten (32) wiedergeben (1307), die auf dem Aufzeichnungsträger gespeichert sind, wobei Aufzeichnungsträger, die in Einklang mit dem ersten Aufzeichnungs-Format sind, keine solchen obligatorisch wiederzugebenden Präambel-Daten enthalten, wobei das erste Aufzeichnungs-Format ein vom Benutzer aufgezeichnetes Format und das zweite Format ein vor-aufgezeichnetes Format ist.

## Revendications

1. Méthode pour la reproduction des données audio et/ou vidéo d'un support d'enregistrement amovible (D, 31) utilisant un dispositif de reproduction qui est adapté pour une reproduction des données d'un support d'enregistrement conforme à un premier format d'enregistrement, où le dit support d'enregistrement est conforme audit premier format d'enregistrement ou conforme à un deuxième format d'enregistrement différent dudit premier format d'enregistrement, ladite méthode comprenant les étapes consistant à :
- suite à une insertion dudit support d'enregistrement (D, 31) dans ledit dispositif de reproduction, lire (1304, P) une information de caractérisation sur ledit support d'enregistrement ;
- déterminer (1305, CTRL) à partir de ladite information de caractérisation si ledit support d'enregistrement inséré dans ledit dispositif de reproduction est conforme audit premier ou audit deuxième format d'enregistrement;
**caractérisé par**:
- si ledit support d'enregistrement inséré est conforme audit deuxième format d'enregistrement, une reproduction obligatoire (1307) de données de préambule (32) enregistrées sur ledit support d'enregistrement au deuxième format d'enregistrement,
où les supports d'enregistrement conformes audit premier format d'enregistrement ne comportent pas de telles données de préambule à reproduire obligatoirement, ledit premier format d'enregistrement étant un format enregistré par l'utilisateur et ledit deuxième format d'enregistrement étant un format pré-enregistré.

2. Méthode selon la revendication 1, dans laquelle lors d'une reproduction desdites données de préambule (32) stockées sur ledit support d'enregistrement (31, D) conforme audit deuxième format d'enregistrement, aucune commande d'interaction de l'utilisateur n'est exécutable sur ledit dispositif de reproduction, excepté pour effectuer une commande d'arrêt pour arrêter la reproduction desdites données de préambule ou effectuer une commande de mise hors tension pour éteindre ledit dispositif de reproduction.

3. Méthode selon la revendication 1 ou 2, dans laquelle ledit support d'enregistrement au deuxième format d'enregistrement (41) comporte deux ou plusieurs éléments d'information de données de préambule (42, 45), chacun appartenant à une autre version linguistique, et où cet élément d'information de données de préambule d'une version linguistique est sélectionné pour une reproduction obligatoire correspondant à une langue pré-sélectionnée.

4. Méthode selon une des revendications 1 à 3, dans laquelle ledit support d'enregistrement au deuxième format d'enregistrement (71) comporte des informations de sous-titrage (72) et un fichier de flux AV (73), dans lequel dans ladite partie de fichier de flux AV ou dans toutes lesdites informations de sous-titrage sont stockées des informations de sous-titrage dupliquées (74), lesquelles informations de sous-titrage dupliquées sont émises avec lesdites données audio et/ou vidéo lors d'une reproduction desdites données audio et/ou vidéo.

5. Appareil pour la reproduction des données audio et/ou vidéo d'un support d'enregistrement amovible (D, 31) et adapté pour une reproduction des données d'un support d'enregistrement conforme à un premier format d'enregistrement, où le dit support d'enregistrement est conforme audit premier format d'enregistrement ou conforme à un deuxième format d'enregistrement différent dudit premier format d'enregistrement, ledit appareil de reproduction comprenant:
- un moyen (1304, P) pour lire une information de caractérisation sur ledit support d'enregistrement après insertion dudit support d'enregistrement dans ledit appareil de reproduction ;
- un moyen (1305, CTRL) pour déterminer à partir de ladite information de caractérisation si ledit support d'enregistrement inséré dans ledit appareil de reproduction est conforme audit premier ou audit deuxième format d'enregistrement ;
- un premier moyen de reproduction (1306) pour reproduire des données audio et/ou vidéo dudit support d'enregistrement inséré si ce support d'enregistrement est conforme audit premier format d'enregistrement,**caractérisé par**:
- un deuxième moyen de reproduction (1307) pour reproduire des données audio et/ou vidéo dudit support d'enregistrement inséré lequel deuxième moyen de reproduction, si ce support d'enregistrement est conforme audit deuxième format d'enregistrement, reproduit obligatoirement (1307) des données de préambule (32) enregistrées sur ledit support d'enregistrement, où ledit support d'enregistrement conforme audit premier format d'enregistrement ne contient pas de telles données de préambule à reproduire obligatoirement, ledit premier format d'enregistrement étant un format enregistré par l'utilisateur et ledit deuxième format d'enregistrement étant un format pré-enregistré.
